# EUROPEAN PATENT SPECIFICATION

(11) **EP 2 009 343 B1**
(45) Date of publication and mention of the grant of the patent: **22.03.2017**
(21) Application number: 08158154.8
(22) Date of filing: 12.06.2008
(51) Int. Cl.: F16P 3/08, H02P 1/32, H02P 6/18, H02P 1/02, H02P 6/24

(54) **Safety system and safety equipment**
Sicherheitssystem und Sicherheitsausrüstung
Système de sécurité et équipement de sécurité

(30) Priority: 28.06.2007 JP 2007170524
(43) Date of publication of application: 31.12.2008
(73) Proprietor: Omron Corporation, Kyoto-shi, Kyoto 600-8530 (JP)
(72) Inventor: Akagi, Tetsuya, Kyoto-shi Kyoto 600-8530 (JP); Nakayama, Teruyuki, Kyoto-shi Kyoto 600-8530 (JP); Higuchi, Toshiyuki, Kyoto-shi Kyoto 600-8530 (JP); Hashimoto, Minoru, Kyoto-shi Kyoto 600-8530 (JP); Kamisono, Daichi, Kyoto-shi Kyoto 600-8530 (JP)
(74) Representative: Kilian Kilian & Partner

(56) References cited:
- EP-A2- 0 826 917
- EP-A2- 1 434 343
- WO-A2-2004/068693
- US-A- 5 767 654

## Description

### BACKGROUND OF THE INVENTION

### 1. Field of the Invention

The present invention relates to a safety system used for securing safety in a production site, etc, in which each kind of machine such as a machine tool or an industrial robot and a worker coexist, and more specifically relates to the safety system provided with safety equipment that detects a stop of a three-phase motor for driving each kind of machine to give a detection output.

### 2. Description of the Related Art

Conventionally, various kinds of safety systems are proposed, for securing safety in a production site, etc, in which each kind of machine such as a machine tool or an industrial robot and a worker coexist. For example, a technique is proposed, in which a stop of the three-phase motor (three-phase induction motor), being a drive source of each kind of machine such as the machine tool and the industrial robot is monitored, and a door of an entrance of a work area of the aforementioned each kind of machine can be opened when the stop of the three-phase motor is confirmed (see, for example, Japanese Patent No. 3344931).

The three-phase motor, being the drive source of each kind of machine, and particularly the three-phase motor of a large capacity of 5.5 kW or more has a higher risk. Therefore, it is required to detect the stop of the three-phase motor in devising safety measures.

In such a three-phase motor of a large capacity, in order to suppress a starting current that flows in an amount 5 times to 10 times a rated current, a star-delta starting method is used in which star connection is set just after start-up, and the connection is changed to delta connection after elapse of a prescribed time, to enable easy transfer to a steady operation.

A construction of a safety system is considered, in which the stop of the three-phase motor started by such a star-delta starting method is detected, and for example, opening of a door switch of the entrance to a work area, in which the machine tool driven by the three-phase motor is installed, is allowed.

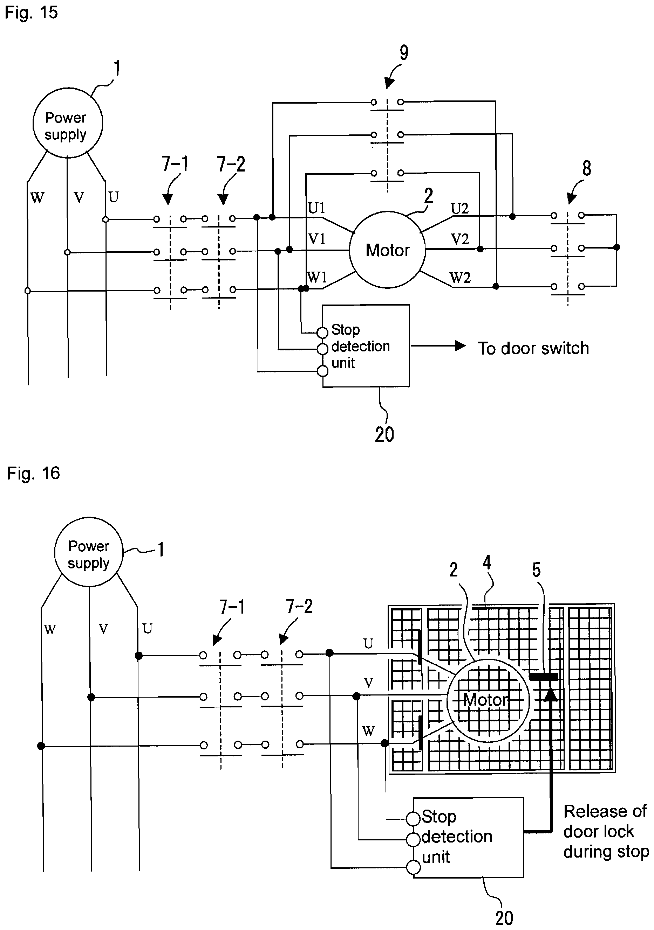

Fig. 15 is a diagram showing an example of the constitution of such a safety system.

In Fig. 15, a reference numeral 2 denotes the three-phase motor connected to a three-phase power supply 1. First and second main magnetic contactors 7-1, 7-2 duplicated for safety, a star connecting magnetic contactor 8 for constituting the star connection, and a delta connecting magnetic contactor 9 for constituting the delta connection, are connected to a three-phase power supply line.

A stop detection unit 20 is connected to the power supply line between the first and second main magnetic contactors 7-1, 7-2 and the three-phase motor 2, for detecting the stop of the three-phase motor 2 by detecting a back electromotive force of the three-phase motor 2 and giving a detection output to an electromagnetic lock type door switch (not shown) to release its lock.

As shown in Fig. 16, a door switch 5 is, for example, the electromagnetic lock type switch, and is attached to a door 4 for going in and out of the work area in which the three-phase motor 2 and the machine tool (not shown) driven by this motor 2 are installed. When the door 4 is closed, the door switch 5 is locked, and the lock is released by the detection output from the stop detection unit 20, to allow the door 4 to be opened. In addition, a signal representing an open/close state of the door 4 is given from the door switch 5 to safety control equipment (not shown).

On/off of the first and second main magnetic contactors 7-1, 7-2 for turning on/off of the power supply to the three-phase motor 2 is controlled, for example, by the aforementioned safety control equipment, and under the control of the safety control equipment, and based on the signal from the door switch 5, contact points of the first and second main magnetic contactors 7-1, 7-2 are turned on, with the door 4 closed, and the power is turned on to the three-phase motor 2.

On/off of the star connecting magnetic contactor 8 and the delta connecting magnetic contactor 9 is controlled, for example, by a star-delta timer (not shown).

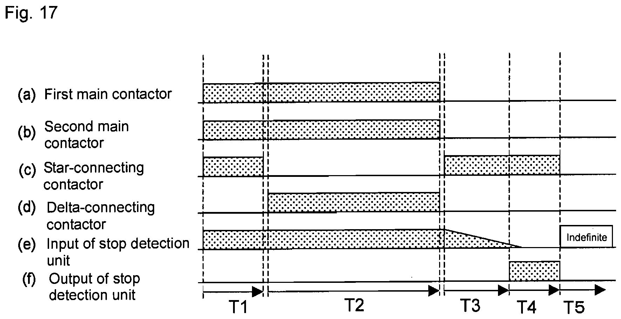

Fig. 17 is a time chart for explaining the operation of each part of Fig. 15, and Figs. 18 to 20 are diagrams showing a connection state in each operation.

Figs. 17A and 17B show an on/off state of the contact points of the first and second main magnetic contactors 7-1, 7-2, Fig. 17C shows the on/off state of the contact point of the star connecting magnetic contactor 8, Fig. 17D shows the on/off state of the contact point of the delta connecting magnetic contactor 9, Fig. 17E shows an input of the stop detection unit 20, and Fig. 17F shows an output of the stop detection unit 20, respectively.

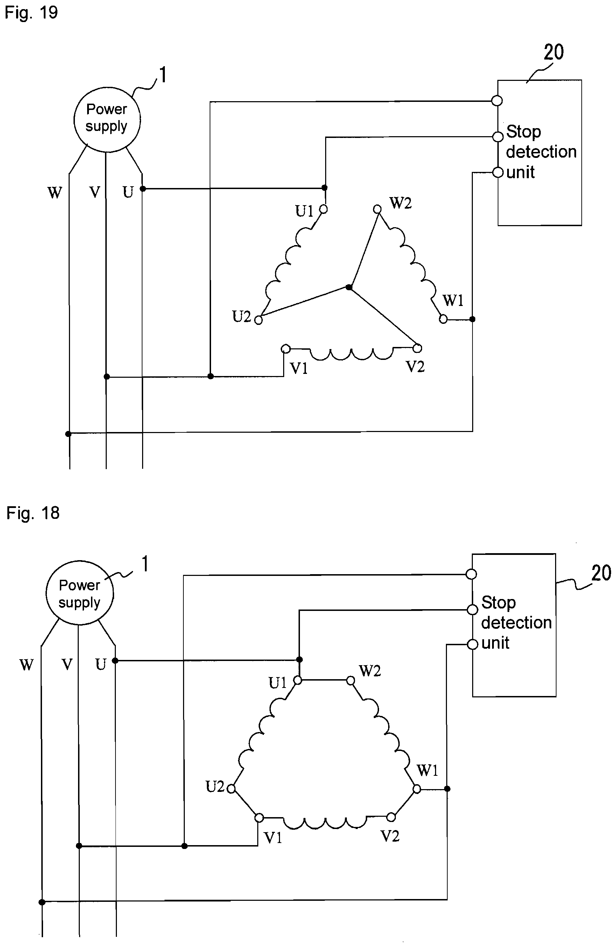

First, in a period T1, the contact points of the first and second main magnetic contactors 7-1, 7-2 are turned on, at the same time, and the contact point of the star connecting magnetic contactor 8 is turned on, to set the connection in the star connection state shown in Fig. 18 and start the three-phase motor 2, and by the start of the three-phase motor 2, a power supply voltage of the motor is given to the stop detection unit 20 as input, and the output is turned off.

In a period T2 after elapse of the period T1, the contact point of the star connecting magnetic contactor 8 is turned off, and the contact point of the delta connecting magnetic contactor 9 is turned on, so as to change the connection from the star connection to the delta connection shown in Fig. 19, and a normal operation is performed.

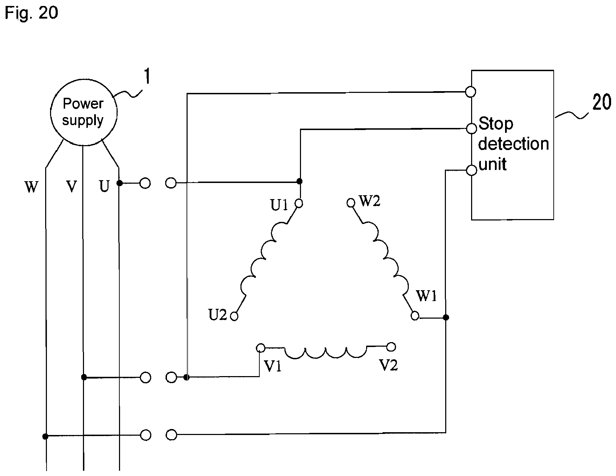

Next, during interrupting the power supply, the contact points of the first and second main magnetic contactors 7-1, 7-2 are turned off, and the contact point of the delta connecting magnetic contactor 9 is also turned off, so as to be set in a connection state shown in Fig. 20. Thereafter, in order to detect the back electromotive force of the three-phase motor 2, the contact point of the star connecting magnetic contactor 8 or the delta connecting magnetic contactor 9 (contact point of the star connecting magnetic contactor in Fig. 17) is turned on. Then, the back electromotive force is inputted in the stop detection unit 20, and when a period T3 is elapsed and the back electromotive force becomes a prescribed threshold value or less, the stop of the three-phase motor 2 is recognized, then the output of the stop detection unit 20 is turned on and the detection output is given.

In a state of turning on the output, namely, in a state of detecting the stop of the three-phase motor 2, for example, the lock of the electromagnetic lock type door switch 5 set on the door 4 is released to allow the door 4 to be opened, and also allows the worker to enter into the work area in which the three-phase motor 2 and the machine tool driven by this motor 2 are installed.

In the structure of Fig. 15, when the power supply to the three-phase motor 2 is interrupted, the back electromotive force is detected. Therefore, either contact points of the star connecting magnetic contactor 8 or the delta connecting magnetic contactor 9 must be turned on.

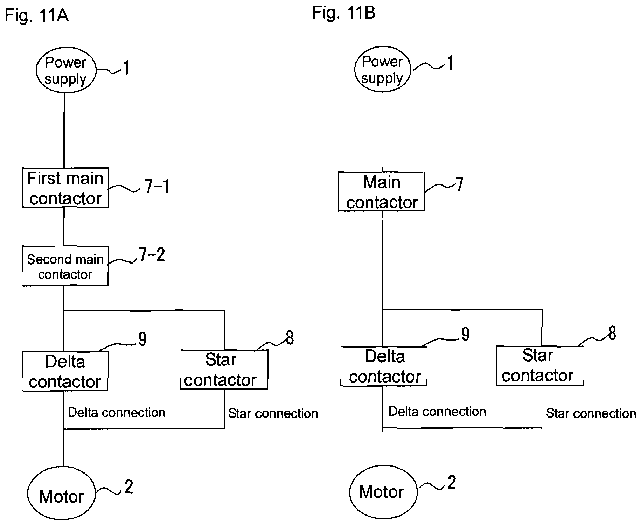

At this time, as is simplified and shown in Fig. 11A, for example, in a case of only one main magnetic contactor when the contact point of the star connecting magnetic contactor 8 is turned on, a power supply route is cut by this one main magnetic contactor, for example, the first magnetic contact 7-1. In order to secure safety, the power supply route must be cut by two or more magnetic contactors. Therefore, it is necessary to provide one more main magnetic contactor 7-2 and cut the power supply route by two main magnetic contactors 7-1 and 7-2. In other words, it is necessary to provide two main magnetic contactors for duplication.

Also, in Fig. 15, if the contact point of the star connecting magnetic contactor 8 and the delta connecting magnetic contactor 9 are turned off, the following case is estimated. That is, generally the stop detection unit 20 has a disconnection detecting function, and therefore a state of turning on both of the star connecting magnetic contactor 8 and the delta connecting magnetic contactor 9 is equivalent to an indefinite state, namely a disconnection state, in which the input of the stop detection unit 20 is not effected, as shown in the above Fig. 20. In this state, it is considered that the output of the stop detection unit 20 is turned off in a period T5 of Fig. 17, and therefore in spite of a normal stop state, this state is erroneously regarded as a disconnection failure and for example, an alarm is given by higher-level equipment, resulting in stop of the system in some cases.

Such a malfunction occurs at the time of changing the connection from the star connecting magnetic contactor 8 to the delta connecting magnetic contactor 9, namely, at a transition time from the period T1 to the period T2 of Fig. 17, or at a transition time from the period T2 to the period T3 of Fig. 17 in which the power supply is interrupted and the back electromotive force is detected.

Moreover, EP 0 826 917 A2 discloses a method for monitoring a three-phase machine.

Furthermore, WO 2004/068693 A2 discloses a brushless and sensorless DC motor control system with locked and stopped rotor detection.

Additionally, EP 1 434 343 A2 discloses an apparatus and a method for monitoring a motor.

Moreover, US 5,767,654 A discloses an apparatus and a method for detecting motor position in PWM operation of a polyphase DC motor.

In view of the above-described points, the present invention is provided, and a main object of the present invention is to provide the safety system and safety equipment that can be constituted by only one main magnetic contactor, although two of them have been required for duplication to interrupt the power supply to the three-phase motor started by star-delta starting, and further provide the safety system and safety equipment capable of detecting the stop of the three-phase motor started by the star-delta starting without malfunction. This object is achieved by a safety equipment according to claim 1 and a safety system according to claim 5. Further advantageous embodiments of the invention are the subject-matter of the dependent claims.

### SUMMARY OF THE INVENTION

Aspects of the invention are set out below:
(1) According to an aspect of the present invention, a safety system for performing star-delta starting of a three-phase motor includes: the three-phase motor; a main switching device that performs turning on/off of a power supply to this three-phase motor; a star connecting switching device that sets wiring of the three-phase motor in a star connection; a delta connecting switching device that sets the wiring of the three-phase motor in a delta connection; and safety equipment that detects a stop of the three-phase motor to give a detection output, wherein the safety equipment includes: a plurality of back electromotive force detection parts connected to both ends of the wiring of at least two phases or more of each phase of the three-phase motor respectively, for detecting each back electromotive force; and a determination part that determines whether or not the three-phase motor is stopped based on the detection output of the back electromotive force detection parts.
   According to the safety system of the aspect of the present invention, at the time of power interruption, in which the main switching device is turned off, the stop of the there-phase motor can be detected, based on the back electromotive force generated in the wiring of each phase of the three-phase motor, in a state of turning off both the star connecting switching device and the delta connecting switching device. That is, there is no necessity for turning on either the star connecting switching device or the delta connecting switching device for detecting the back electromotive force. Therefore it is not necessary to provide two main switching devices for duplication.
   In addition, at the time of changing the connection from the star connection to the delta connection, even if contact points of both of the star connecting switching device and the delta connecting switching device are turned off, indefinite input state of them such as a disconnection state does not occur, because each back electromotive force detection part is connected to both ends of the wiring of at least two phases of each phase or more respectively.
(2) According to another aspect of the safety system, an electromagnetic lock type door switch is set on a door for going into or out of a work area in which a machine driven by the three-phase motor is installed, the back electromotive force detection parts of the safety equipment are electrically insulated respectively, and the determination part further determines existence/non-existence of the disconnection and releases the lock of the door switch by a detection output of the safety equipment.
   According to this aspect, the stop of the three-phase motor for driving the machine is detected and the lock of the door switch is thereby released. Therefore, when a worker opens the door and enters into the work area in which the machine is installed, the machine is stopped and a safety is secured.
(3) According to yet another aspect of the present invention, a safety equipment of the present invention is a safety equipment for detecting the stop of the three-phase motor, including a plurality of back electromotive force detection parts for being connected to both ends of the wiring of at least two phases or more of each phase of the three-phase motor respectively; and a determination part that determines whether or not the three-phase motor is stopped based on the detection output of the back electromotive force detection parts, and the plurality of back electromotive force detection parts detect back electromotive forces respectively.
   According to the safety equipment of the aspect of the present invention, the stop of the three-phase motor can be detected based on the back electromotive force generated in the wiring of at least two phases of each phase of the three-phase motor, and in addition, since each back electromotive force detection part is respectively connected to the both ends of the wiring of each phase, an input to each back electromotive force detection part is not equivalent to the disconnection state when the connection state of the three-phase motor is changed.
   Also, a plurality of back electromotive force detection parts are respectively connected to the both ends of the wiring of two phases or more of each phase of the three-phase motor, and the safety system of the present invention includes the three-phase motor; the main switching device that performs turning on/off the power supply to this three-phase motor; the star connecting switching device that sets the wiring of the three-phase motor in the star connection, the delta connecting switching device that sets the wiring of the three-phase motor in the delta connection, thus starting the three-phase motor by the star/delta starting. When the three-phase motor is used in such a safety system, the stop of the three-phase motor can be detected based on the back electromotive force generated in the wiring of each phase of the three-phase motor, in a state of turning off both of the star connecting switching device and the delta connecting switching device at the time of turning off the main switching device. Therefore it is not necessary to provide two main switching devices for duplication.
(4) According to yet another aspect of the safety equipment of the present invention, the back electromotive force detection parts are respectively electrically insulated, and further the determination part determines existence/non-existence of the disconnection, and the contact point of the main switching device that performs turning on/off of the power supply is interposed between one of the terminals of the wiring of each phase of the three-phase motor and the terminal of the three-phase power supply, the contact point of the star connecting switching device is interposed between the other terminal of the wiring and a neutral point, the contact point of the delta connecting switching device is interposed between one of the terminals of the wiring and the other terminal of the wiring of a different phase, and the three phase motor is started by the star/delta starting.
   According to this aspect, even if the contact points of both of the star connecting switching device and the delta connecting switching device are turned off at the time of changing the connection from the star connection to the delta connection, the input is not in an indefinite state such as a disconnection state, because each back electromotive force detection part is respectively connected to the both ends of the wiring of each phase, and a malfunction does not occur by regarding this state as disconnection. Further, since the back electromotive force detection parts connected to the wiring of each phase are electrically insulated respectively and are formed in an independent system, short-circuiting fault between phases can be prevented.
(5) According to the aforementioned aspect of (4), a contact input part is provided, to which a contact input corresponding to the contact state of the main switching device is given, and the determination part determines the stop of the three-phase motor, based on the contact state from the contact input part, when the contact point of the main switching device is turned off and all electromotive forces respectively detected by the back electromotive force detection parts become under a threshold value.
   According to this aspect, the stop of the three-phase motor is detected, when all back electromotive forces generated in the wiring of each phase after interrupting the power supply to the three-phase motor by turning off the contact point of the main switching device, become under the threshold value.
(6) According to the aforementioned aspect (4) or (5), instead of the star-delta starting, normal starting of the three-phase motor is possible, and at the time of the normal starting, each back electromotive force detection part is respectively connected to each one end of the wiring of different phases, instead of being connected to the both ends of the wiring of each phase of the three-phase motor.
   Change of the connection of each back electromotive force detection part according to the star/delta starting and normal starting may be performed by a changeover switch provided outside of this safety equipment or a changeover function may be provided inside.
   According to this aspect, it is possible to detect the stop of the three-phase motor started by the star-delta starting, and also it is possible to detect the stop of the three-phase motor started normally.
(7) The safety equipment of yet another aspect of the present invention is the safety equipment which is capable of detecting the stop of a plurality of three-phase motors, and which can be connected to the both ends of the wiring of at least one phase or more of each phase of the three-phase motor started by star-delta starting or can be connected to each one end of the wiring of the three-phase motor started normally respectively, including a plurality of back electromotive force detection parts for detecting each back electromotive force; the determination part for determining whether or not the three-phase motor is stopped based on the detection output of the back electromotive force detection parts, wherein the back electromotive force detection parts are respectively electrically insulated and the determination part further determines the existence/non-existence of disconnection, and the plurality of back electromotive force detection parts are connected to different three-phase motors.
   According to the safety equipment of the aspect of the present invention, the plurality of back electromotive force detection parts are connected to the different three-phase motors, and the stop of the plurality of three-phase motors can be detected. The different three-phase motors may be star-delta starting three-phase motors, may be normal starting three-phase motors, or may be a combination of the star-delta starting three-phase motors and the normal starting three-phase motors.
(8) According to yet another aspect of the safety equipment, the machine driven by the three-phase motor is installed in the work area, and the electromagnetic lock type door switch is set on the door for going in/out of the work area, and the lock of the door switch is released by the detection output of this safety equipment that detects the stop of the three-phase motor.

The machine refers to each kind of machines such as a machine tool, a printing machine, a transportation machine, a robot, and a construction machine, etc.

The work area is the area in which the machine is installed and the work is performed.

According to this aspect, the stop of the three-phase motor for driving the machine is detected and the lock of the door switch is released. Therefore, when a worker opens the door and enters into the work area in which the machine is installed, the machine is stopped and safety is secured.

According to the aspect of the present invention, the stop of the three-phase motor can be detected based on the back electromotive force generated in the wiring
of each phase of the three-phase motor, in a state of turning off both of the star connecting switching device and the delta connecting switching device, at the time of interrupting the power supply in which the main switching device is turned off. Therefore, it is not necessary to turn on either the star connecting switching device or the delta connecting switching device for detecting the back electromotive force. Thus, there is no necessity for providing two main switching devices for duplication.

In addition, the stop of the three-phase motor can be detected based on the back electromotive force generated in the wiring of at least two phases or more of each phase of the three-phase motor, and in addition, since each back electromotive force detection part is respectively connected to the both ends of the wiring of each phase, the input to each back electromotive force detection part is not indefinite like the disconnection state, at the time of changeover of the connection state of the three-phase motor. Thus, the malfunction does not occur, by regarding the changeover of the connection state of the three-phase motor as disconnection.

### BRIEF DESCRIPTION OF THE DRAWINGS

Fig. 1 is a schematic block diagram of a safety system according to an embodiment of the present invention;
Fig. 2 is a diagram showing a structure of a connection state of a three-phase power supply, a three-phase motor and a stop detection unit;
Fig. 3 is a diagram showing the three-phase motor and a back electromotive force detection circuit;
Fig. 4 is a block diagram of the stop detection unit of Fig. 1;
Figs. 5A and 5B are diagrams for explaining disconnection detection;
Fig. 6 is a flowchart used for explaining an operation;
Fig. 7 is a time chart used for explaining the operation;
Fig. 8 is a diagram showing a star-connection state;
Fig. 9 is a diagram showing a delta-connection state;
Fig. 10 is a diagram showing a connection state at the time of interrupting power supply;
Figs. 11A and 11B are diagrams for explaining interruption by a contactor of a power supply route;
Fig. 12 is a diagram showing a state that the stop detection unit is applied to normal starting;
Fig. 13 is a block diagram corresponding to star-delta starting and normal starting;
Fig. 14 is a block diagram corresponding to two motors;
Fig. 15 is a block diagram for explaining a subject of the present invention;
Fig. 16 is a diagram showing a relation between the stop detection unit of Fig. 15 and a door switch;
Fig. 17 is a time chart used for explaining the operation of Fig. 15;
Fig. 18 is a diagram showing a star-connection state;
Fig. 19 is a diagram showing a delta-connection state; and
Fig. 20 is a diagram showing the connection state at the time of interrupting the power supply.

### DETAILED DESCRIPTION OF THE PREFERRED EMBODIMENTS

Preferred embodiments of the present invention will be described below with reference to the drawings.

### (Embodiment 1)

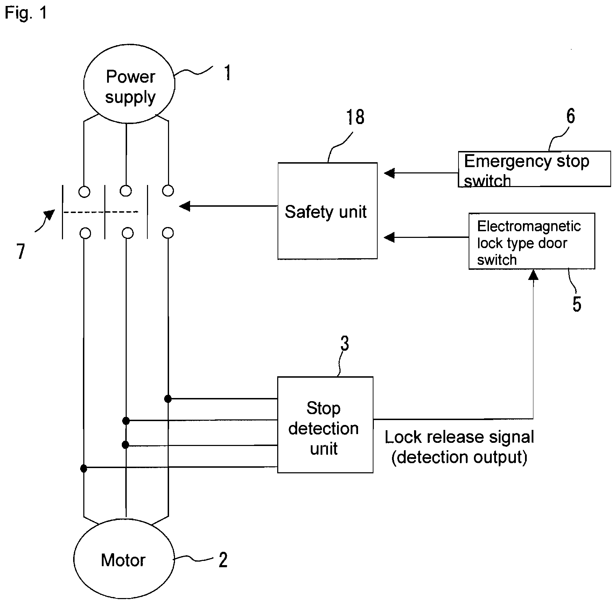

Fig. 1 is a schematic block diagram of a safety system according to an embodiment of the present invention.

This safety system includes a three-phase power supply 1; a three-phase motor 2 connected to this three-phase power supply 1, for driving a machine tool (not shown); a stop detection unit 3, being safety equipment of the present invention, for detecting the stop of the three-phase motor 2 as will be described later and giving a detection output; an electromagnetic lock type door switch 5 set on a door 4 of an entrance of a work area in which, as shown in Fig. 16, the three-phase motor 2 and the machine tool are installed, and to which the detection output from the stop detection unit 3 is given as a lock release signal; and a safety unit 18, being safety control equipment, for controlling turning on/off of a main magnetic contactor 7 for turning on/off of a power supply, based on an output of the door switch 5 and an emergency stop switch 6.

As shown in the above Fig. 16, the work area, in which the three-phase motor 2 and the machine tool are installed, is surrounded and partitioned by a safety bar, and the door 4, being the entrance into the work area, is set on this safety bar, and an electromagnetic lock type door switch 5 is set on this door 4. Regarding this door switch 5, for example, a switch body is attached to a fixed frame side of the door 4, an operation key inserted and pulled out into/from an opening part of the switch body is attached to a movable part side of the door 4, and when the door 4 is closed and the operation key is inserted into the opening part of the switch body, the switch is mechanically locked, thus inhibiting an opening of the door 4. In addition, when the detection output that detects the stop of the three-phase motor 2 from the stop detection unit 3 is given to the door switch 5 as a lock release signal, a solenoid is operated, thereby releasing the lock and allowing the door 4 to be opened.

This door switch 5 gives to the safety unit 18 a safety input of a safety side for allowing the machine tool to be driven in a state that the door 4 is closed, and gives to the safety unit 18 the safety input of a danger side for inhibiting the drive of the machine tool in a state that the door 4 is opened.

By the operation of the worker in an emergency, the emergency stop switch 6 gives to the safety unit 18 the safety input of the danger side for inhibiting the drive of the machine tool, and at normal time, gives to the safety unit 18 the safety input of the safety side for allowing the machine tool to be driven.

A micro computer is mounted on the safety unit 18 of this embodiment, and based on the safety input from the emergency stop switch 6 and the door switch 5, turning on/off of a main magnetic contactor 7 is controlled in accordance with a program. When both of the safety inputs from the emergency stop switch 6 and the door switch 5 are the safety side, the main magnetic contactor 8 is turned on to supply power to the three-phase motor 2. Meanwhile, when either of the safety input from the emergency stop switch 6 or the door switch 5 is the danger side, the main magnetic contactor 7 is turned off to interrupt the power supply to the three-phase motor 2.

As other embodiment, on/off of the main magnetic contactor 7 may be controlled based on the safety input from the emergency stop switch 6 and the door switch 5, by a sequence control, without mounting the micro computer on the safety unit.

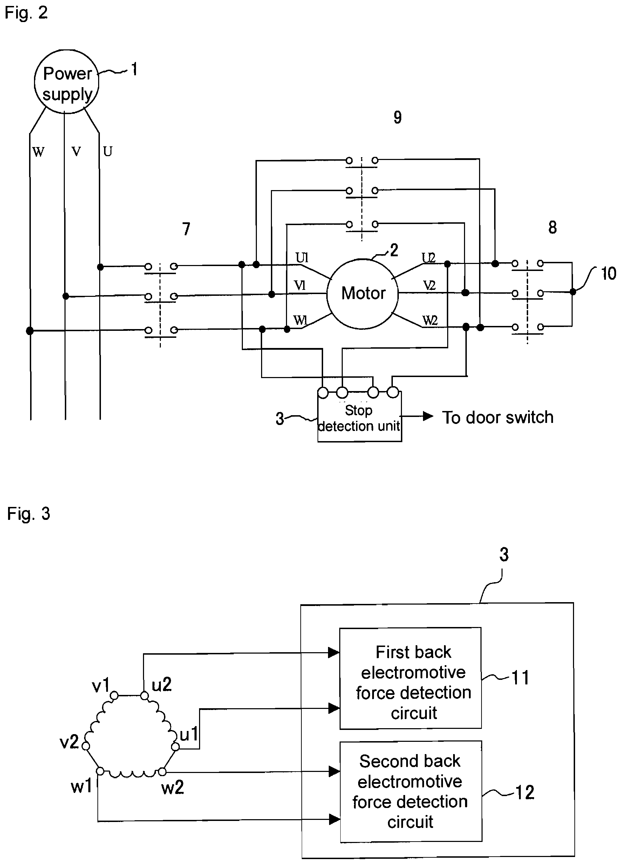

Fig. 2 is a diagram showing structures of connection states of the three-phase power supply 1 of Fig. 1, the three-phase motor 2, and the stop detection unit 3.

In this embodiment, there are provided the aforementioned main magnetic contactor 7 that performs turning on/off of the power supply to the three-phase motor 2; the star connecting magnetic contactor 8 that sets the wiring of the three-phase motor 2 in the star connection; and the delta connecting magnetic contactor 9 that sets the wiring of the three-phase motor 2 in the delta connection.

The contact point of the main magnetic contactor 7 connects between one of the terminals U1, V1, W1 of the wiring of the three-phase motor 2, and each terminal U, V, W of the three-phase power supply 1.

The contact point of the star connecting magnetic contactor 8 connects between the other terminal U2, V2, W2 of the wiring and a neutral point 10, and when the contact point is turned on, the wiring of the three-phase motor 2 is set in the star connection. At this time, in order not to short-circuit the three-phase power supply 1, the contact point of the delta connecting magnetic contactor 9 is set in an off state.

Also, the contact point of the delta connecting magnetic contactor 9 connects between terminals U, V, W of the three-phase power supply 1 and the other terminals U2, V, W2 of the wiring of the three-phase motor 2, and in a case of turning on, the terminals U and W2, V and U2, W and V2 are respectively connected to each other, to set the wiring of the three-phase motor 2 in the delta connection. At this time, the contact point of the star connecting magnetic contactor 8 is set in an off state.

On and off of the main magnetic contactor 7 is controlled by the safety unit 18 of Fig. 1, and on and off of the star connecting magnetic contactor 8 and the delta connecting magnetic contactor 9 is controlled by a star-delta timer (not shown).

The stop detection unit 3 of this embodiment detects the back electromotive force (BEMF) of the three-phase motor and detects the stop of the same, and is connected to both ends U1, U2; W1, W2 of the wiring of U-phase and W-phase respectively.

As shown in Fig. 3, this stop detection unit 3 includes inside, first and second back electromotive force detection circuits 11 and 12 electrically insulated, and detects the back electromotive force of each phase U, W.

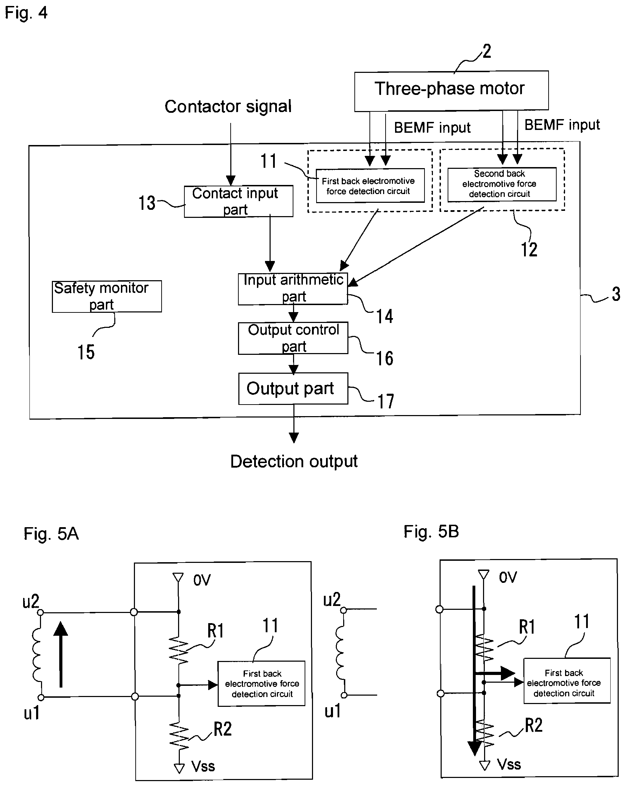

Fig. 4 is a block diagram of the stop detection unit of this embodiment.

This stop detection unit 3 includes first and second back electromotive force detection circuits 11 and 12 for detecting the back electromotive force of the three-phase motor 2; a contact input part 13 to which a contact input (contactor signal) corresponding to the contact state of the main magnetic contactor 7 is given; an input arithmetic part 14, being a determination part, for determining an output pattern based on an output of the first and second back electromotive force detection circuits 11 and 12 and an output of the contact input part 13; a safety monitor part 15 for checking whether or not each function works normally and making a self-diagnosis; an output control part 16 for giving an output command by a permit from the safety monitor part 15 and a designation from the input arithmetic part 14; and an output part 17 for outputting the detection output.

The first and second back electromotive force detection circuits 11 and 12 are electrically insulated for preventing the short-circuiting fault between phases, and optical coupling is made by a photo-coupler between the first and second back electromotive force detection circuits 11, 12, and the input arithmetic part 14.

In the input arithmetic part 14, based on the output of the first and second back electromotive force detection circuits 11, 12, and the output of the contact input part 13, the stop of the three-phase motor 2 is determined, and further the existence/non-existence of the disconnection is also determined.

Figs. 5A and 5B are diagrams for explaining disconnection detection, Fig. 5A shows a normal state, and Fig. 5B shows a disconnection state, and the back electromotive force detection circuit 11, being one of the first and second back electromotive force detection circuits 11, 12, is typically shown.

In a normal state shown in Fig. 5A, when the power is supplied to the three-phase motor 2, a power supply voltage of the motor is inputted in the back electromotive force detection circuit 11, and when the power supply to the three-phase motor 2 is interrupted and is rotated under its own inertia, the back electromotive force is inputted in the back electromotive force detection circuit 11, and at the time of stop, OV is inputted in the back electromotive force detection circuit 11.

Meanwhile, in the disconnection state shown in Fig. 5B, a voltage divided by resistors R1, R2 is inputted, thus making it possible to determine this state as the disconnection state.

In the input arithmetic part 14 of Fig. 4, the existence/non-existence of the disconnection is thus determined, based on the output of the first and second back electromotive force detection circuits 11 and 12.

A micro computer is mounted on the stop detection unit 3 of this embodiment gives the detection output, being a semiconductor output (transistor output), in accordance with the program, based on the contact input from the main magnetic contactor 7 and the detection voltage of the three-phase motor 2.

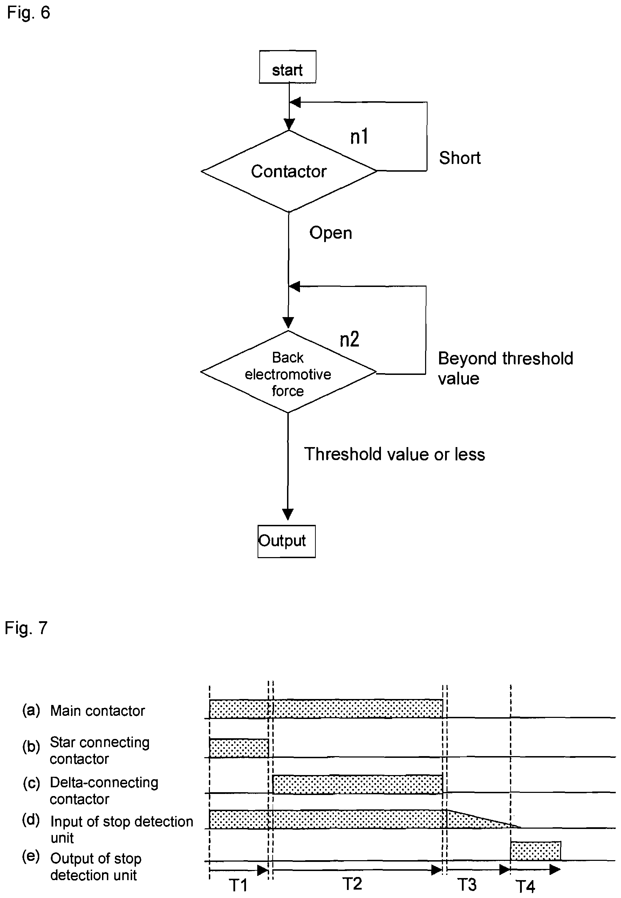

Fig. 6 is a flowchart used for explaining an operation of the stop detection unit 3 of this embodiment.

First, whether or not the contact point of the main magnetic contactor 7 is turned on (short) or turned off (open) is determined (step n1), and when it is turned off, the back electromotive force is monitored (step n2). When both of the back electromotive forces detected by the first and second back electromotive force detection circuits 11 and 12 are threshold vale or less, the output is turned on to give the detection output.

Note that the disconnection detection is performed on a steady basis, and when the disconnection is detected, the output is turned off, and for example error output is given.

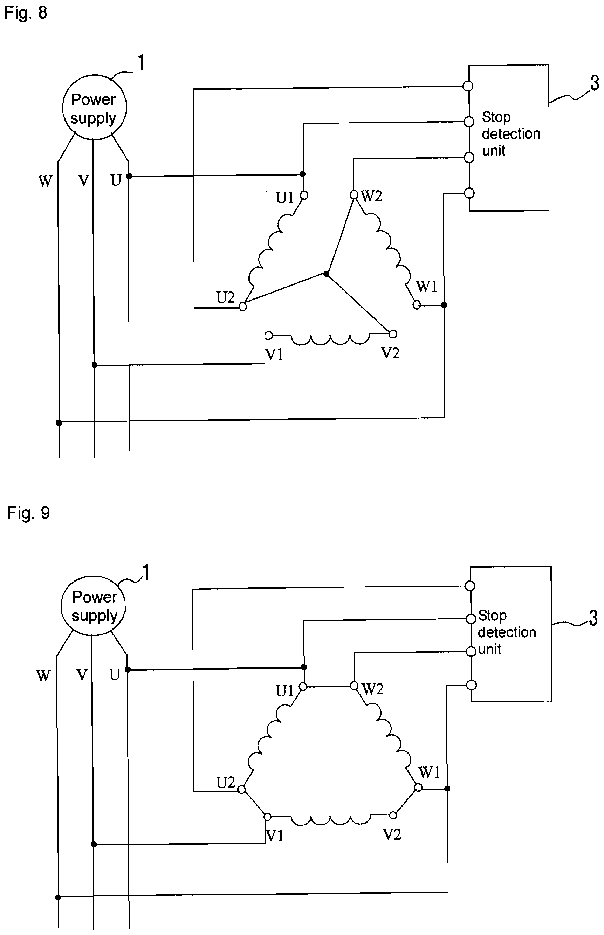

Fig. 7 is a time chart used for explaining the operation of the stop detection unit 3 of this embodiment, and Figs. 8 to 10 are diagrams showing the connection state in each operation.

Fig. 7A shows an on/off state of the contact point of the main magnetic contactor 7, Fig. 7B shows the on/off state of the contact point of the star connecting magnetic contactor 8, Fig. 7C shows the contact state of the delta connecting magnetic contactor 9, Fig. 7D shows the input of the stop detection unit 3, and Fig. 7E shows the output of the stop detection unit 3, respectively.

First, in the period T1, the contact point of the main magnetic contactor 7 is turned on, and the contact point of the star connecting magnetic contactor 8 is turned on, then the motor is started in a star connection state shown in Fig. 8, and the power supply voltage of the motor is given to the stop detection unit 3 by start of the three-phase motor 2 as input, and the output is tuned off. In this state, the lock of the door switch 5 is not released, thus inhibiting opening/closing the door 4.

In the period T2 after elapse of the period T1, the contact point of the star connecting magnetic contactor 8 is turned off, and the contact point of the delta connecting magnetic contactor is turned on, and the connection is changed from the star connection state to the delta connection state shown in Fig. 9, to perform a normal operation.

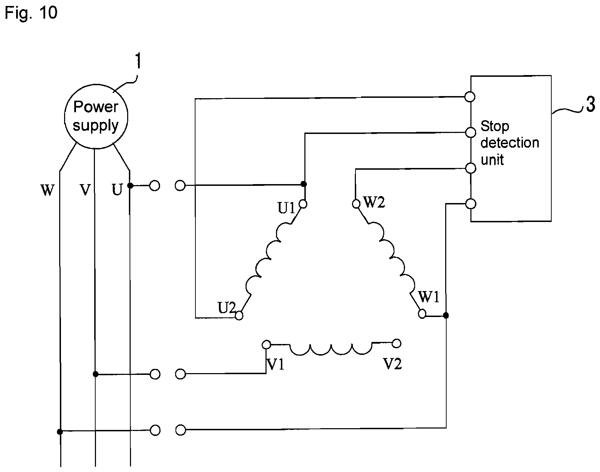

Next, at the time of interrupting the power supply, the contact point of the main magnetic contactor 7 is turned off, and the contact point of the delta connecting magnetic contactor 9 is also turned off, and the connection is set in a state shown in Fig. 10. Then, the back electromotive force of the three-phase motor 2 is detected, and when it becomes a specific threshold value or less, the stop of the three-phase motor 2 is determined, then the output of the stop detection unit 3 is turned on, and the detection output is given.

In a state that the output is turned on to give the detection output, the lock of the electromagnetic lock type door switch 5 is released to allow the door 4 to be opened/closed, and allow the worker to enter into the work area in which the machine tool driven by the three-phase motor 2 is installed. At this time, the three-phase motor 2 is stopped and the operation of the machine tool is stopped, and therefore the safety of the worker is secured.

In the structure of the above Fig. 15, in a state that the contact points of all of the first and second magnetic contactors 7-1, 7-2, the star connecting magnetic contactor 8, and the delta connecting magnetic contactor 9 are turned off, the input of the stop detection unit 20 is set in a state equivalent to the disconnection state. Therefore, the output of the stop detection unit 20 is turned off, and in spite of a normal stop state, this state is erroneously regarded as a disconnection failure and for example, an alarm is given by higher-level equipment, resulting in stop of the system in some cases.

Meanwhile, in this embodiment, in a state that the contact points of all of the magnetic contactors 7, 8, 9 are turned off, as shown in Fig. 10, the input terminals of each back electromotive force detection circuits 11, 12 are set in a connection state via each wiring of U-phase and W-phase. Therefore, the stop of the three-phase motor 2 is not erroneously regarded as the disconnection failure.

In addition, it is not necessary to turn on the contact point of the star connecting magnetic contactor 8 or the delta connecting magnetic contactor 9, to detect the back electromotive force.

As described above, in the stop detection unit 3 of this embodiment, the stop of the three-phase motor 2 is not erroneously regarded as the disconnection failure. Further, a safety category is not deteriorated, because two circuits of the back electromotive force detection circuits 11, 12 are provided for duplication.

Moreover, this embodiment can be constituted by only one main magnetic contactor 7, compared to the structure of the above Fig. 15 in which two main magnetic contactors 7 are required for duplication.

That is, in the structure of Fig. 15, when the power supply to the three-phase motor 2 is interrupted, either contact point of the star connecting magnetic contactor 8 or the delta connecting magnetic contactor 9 must be turned on, to detect the back electromotive force.

At this time, as is simplified and shown in Fig. 11A, for example, when the contact point of the star connecting magnetic contactor 8 is turned on, and when there is only one main magnetic contactor, by this one main magnetic contactor, for example, by the first magnetic contactor 7-1, the power supply route is cut. In order to secure the safety, it is necessary to cut the power supply route by two or more magnetic contactors, and therefore one more main magnetic contactor 7-2 is provided, and the power supply route is cut by two main magnetic contactors 7-1 and 7-2.

Meanwhile, in this embodiment, when the power supply to the three-phase motor 2 is interrupted, the back electromotive force can be detected in a state of turning off all magnetic contactors 7, 8, 9. Therefore as simplified and shown in Fig. 1B, the power supply route is cut by two magnetic contactors 7, 8, or 7, 9, and therefore there is no necessity for providing two main magnetic contactors.

### (Other embodiment)

In the above-described embodiments, explanation has been given by applying the stop detection unit 3 to star-delta starting. However, the stop detection unit 3 of the present invention can be applied to a normal starting such as a full voltage starting.

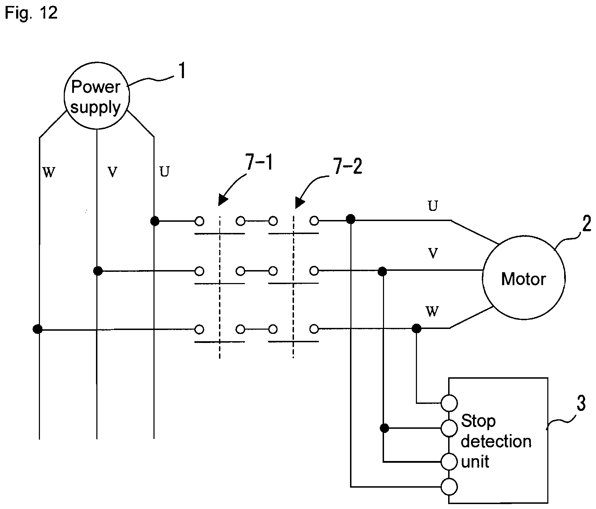

Fig. 12 is a diagram showing the connection state in a case of the normal starting, in which for example, the terminals U, W of the wiring of the three-phase motor 2 are respectively connected to each terminal of the stop detection unit 3, and the terminal V of the wiring is commonly connected to the terminal of the stop detection unit 3.

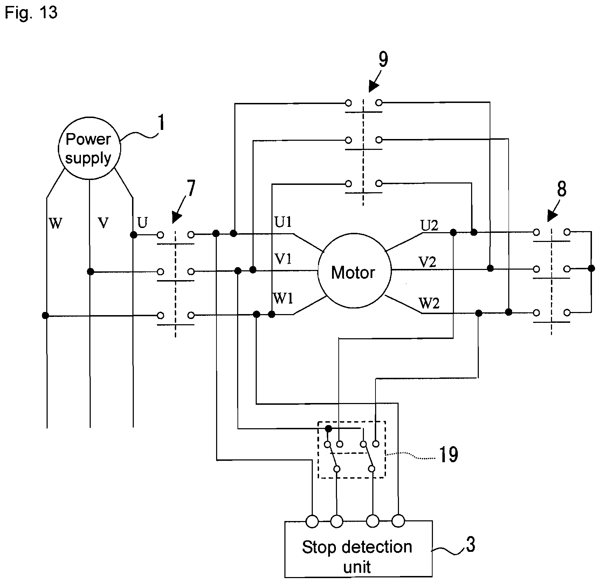

In addition, as other embodiment of the present invention, as shown in Fig. 13, the connection state may be changed by a change-over switch 19, according to the star-delta starting and the normal starting. Further, the function of the change-over switch may be incorporated in the stop detection unit 3 itself.

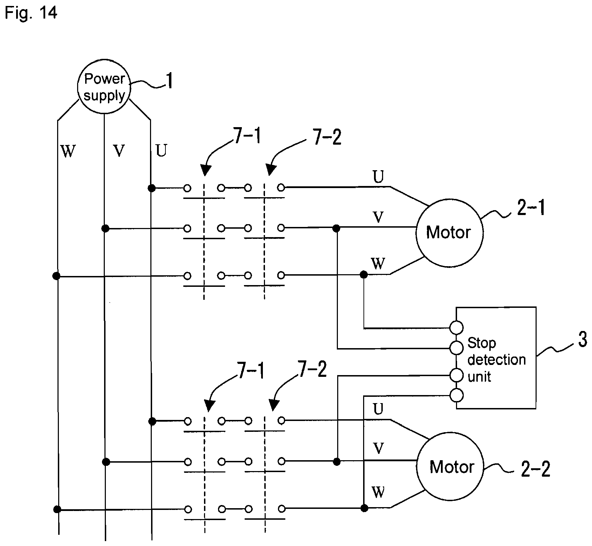

In addition, as other embodiment of the present invention, the stop of another normal started or star-delta started three-phase motor may be detected. Fig. 14 is a diagram showing the connection structure when the stop of normal-started two three-phase motors 2-1, 2-2 is detected by the stop detection unit 3. One of the back electromotive force detection circuits of the stop detection unit 3, namely the back electromotive force detection circuit 11, is connected to one of the three-phase motors, namely three-phase motor 2-1, and the other back electromotive force detection circuit 12 is connected to the other three-phase motor 2-2. Note that by increasing the number of back electromotive force detection parts, the stop of a plurality of star-delta started or normal-started three-phase motors may be detected.

The present invention is useful for a safety management such as a production site where the machine and the worker coexist.

## Claims

1. Safety equipment (3) adapted to detect a stop of a three-phase motor (2), the safety equipment (3) comprising:
a plurality of back electromotive force detection parts (11, 12), each of the plurality of back electromotive force detection parts (11, 12) is configured to be connected to two terminals of wiring of each phase of at least two phases or more of the three-phase motor (2) respectively to detect a back electromotive force of each phase; and
a determination part (14) that determines whether or not the three-phase motor (2) is stopped based on a detection output of the back electromotive force detection parts (11, 12), wherein
the plurality of back electromotive force detection parts detect each back electromotive force.

2. The safety equipment (3) according to claim 1, wherein the back electromotive force detection parts are respectively electrically insulated, and the determination part is further configured to determine existence/non-existence of a disconnection state of the three-phase motor (2) based on the back electromotive force detected in each phase; and, the safety equipment (3) is configured to connect to: a contact point of a main switching device (7) for turning on/off of power supply is interposed between one of the terminals of the wiring of each phase of the three-phase motor (2) and a terminal of a three-phase power supply (1),
a contact point of a star-connecting switching device (8) is interposed between the other terminal of the wiring and a neutral point, and
a contact point of a delta-connecting switching device (9) is interposed between one of the terminals of the wiring and the other terminal of the wiring of a different phase, and the three-phase motor (2) is star-delta started.

3. The safety equipment (3) according to claim 2, comprising
a contact input part (13) to which a contact input corresponding to a contact state of the main switching device (7) is given,
wherein the determination part (14) determines a stop of the three-phase motor (2) based on the contact state from the contact input part (13), when the contact point of the main switching device (7) is turned off and when all back electromotive forces detected by the back electromotive force detection parts (11, 12) are less than or equal to threshold values.

4. The safety equipment (3) according to any one of claims 1 to 3, wherein a machine driven by the three-phase motor (2) is installed in a work area, and an electromagnetic lock type door switch is set on a door for going in/out of the work area, wherein the safety equipment is configured to output a detection output, based on a detection of the stop of the three-phase motor, to a lock of the door switch to allow the door to be released.

5. A safety system for performing star-delta starting of the three-phase motor (2), comprising:
the three-phase motor (2);
a main switching device (7) for performing turning on/off of a power supply to the three-phase motor (2);
a star connecting switching device (8) for setting wiring of the three-phase motor (2) in a star connection;
a delta connecting switching device (9) for setting the wiring of the three-phase motor (2) in a delta connection; and
the safety equipment (3) according to any one of claims 1 to 3 for outputting a detection output based on a detection of a stop of the three-phase motor (2).

6. The safety system according to claim 5, wherein
an electromagnetic lock type door switch is set on a door for going in/out of a work area in which a machine driven by the three-phase motor is installed, and the back electromotive force detection parts (11, 12) of the safety equipment (3) are respectively electrically insulated, and the determination part (14) is further configured to determine existence/non-existence of a disconnection state of the three-phase motor (2) based on the back electromotive force detected in each phase, and releases a lock of the door switch based on the detection output of the safety equipment (3).

## Patentansprüche

1. Sicherheitsausrüstung (3), die dazu angepasst ist, einen Halt eines Drehstrommotors (2) zu erfassen, wobei die Sicherheitsausrüstung (3) Folgendes umfasst:
eine Vielzahl von gegenelektromotorische-Kraft-Erfassungsteilen (11, 12), wobei jedes der Vielzahl von gegenelektromotorische-Kraft-Erfassungsteilen (11, 12) dazu ausgelegt ist, mit jeweils zwei Verdrahtungsanschlüssen jeder Phase von mindestens zwei Phasen oder mehreren des Drehstrommotors (2) verbunden zu werden, um eine gegenelektromotorische Kraft jeder Phase zu erfassen; und
ein Bestimmungsteil (14), das auf der Basis eines Erfassungssignals der gegenelektromotorische-Kraft-Erfassungsteile (11, 12) bestimmt, ob der Drehstrommotor (2) angehalten wird oder nicht, wobei
die Vielzahl von gegenelektromotorische-Kraft-Erfassungsteilen die jeweilige gegenelektromotorische Kraft erfassen.

2. Sicherheitsausrüstung (3) nach Anspruch 1, wobei die gegenelektromotorische-Kraft-Erfassungsteile jeweils elektrisch isoliert sind und das Bestimmungsteil ferner dazu ausgelegt ist, das Vorhandensein/Nichtvorhandensein eines Trennzustands des Drehstrommotors (2) auf der Basis der gegenelektromotorischen Kraft zu ermitteln, die in jeder Phase erfasst wird; und die Sicherheitsausrüstung (3) dazu ausgelegt ist, sich mit Folgendem zu verbinden: einer Kontaktstelle einer Hauptschaltvorrichtung (7) zum Ein-/Ausschalten der Stromversorgung, die zwischen einem der Verdrahtungsanschlüssen jeder Phase des Drehstrommotors (2) und einem Anschluss eines Drehstromnetzteils (1) angeordnet ist,
einer Kontaktstelle einer Sternschaltungsschaltvorrichtung (8), die zwischen dem anderen Verdrahtungsanschluss und einem Nullpunkt angeordnet ist, und
einer Kontaktstelle einer Dreieckschaltungsschaltvorrichtung (9), die zwischen einem der Verdrahtungsanschlüsse und dem anderen Verdrahtungsanschluss einer anderen Phase angeordnet ist, und der Drehstrommotor (2) wird dreiecksgestartet.

3. Sicherheitsausrüstung (3) nach Anspruch 2, umfassend
ein Kontakteingangsteil (13), in das ein Kontakteingang eingespeist wird, der einem Kontaktzustand der Hauptschaltvorrichtung (7) entspricht,
wobei das Bestimmungsteil (14) einen Halt des Drehstrommotors (2) auf der Basis des Kontaktzustands des Kontakteingangsteils (13) bestimmt, wenn die Kontaktstelle der Hauptschaltvorrichtung (7) ausgeschaltet ist und wenn alle gegenelektromotorischen Kräfte, die von den gegenelektromotorische-Kraft-Erfassungsteilen (11, 12) erfasst werden, kleiner als oder gleich Schwellenwerten sind.

4. Sicherheitsausrüstung (3) nach einem der Ansprüche 1 bis 3, wobei eine Maschine, die von dem Drehstrommotor (2) angetrieben wird, in einem Arbeitsbereich installiert ist und ein Türschalter mit elektromagnetischer Verriegelung an einer Tür zum Hineingehen in den und Hinausgehen aus dem Arbeitsbereich eingestellt ist, wobei die Sicherheitsausrüstung dazu ausgelegt ist, ein Erfassungsausgangssignal auf der Basis einer Erfassung des Halts des Drehstrommotors an eine Verriegelung des Türschalters auszugeben, damit die Tür freigegeben wird.

5. Sicherheitssystem zum Durchführen von Stern-Dreiecks-Starten des Drehstrommotors (2), umfassend:
den Drehstrommotor (2);
eine Hauptschaltvorrichtung (7) zum Durchführen des Ein- und Ausschaltens einer Stromversorgung an den Drehstrommotor (2);
eine Sternschaltungsschaltvorrichtung (8) zum Einstellen der Verdrahtung des Drehstrommotors (2) in einer Sternschaltung;
eine Dreieckschaltungsschaltvorrichtung (9) zum Einstellen der Verdrahtung des Drehstrommotors (2) in einer Dreiecksschaltung; und
die Sicherheitsausrüstung (3) nach einem der Ansprüche 1 bis 3 zum Ausgeben eines Erfassungsausgangssignals auf der Basis einner Erfassung des Hals des Drehstrommotors (2).

6. Sicherheitssystem nach Anspruch 5, wobei ein Türschalter mit elektromagnetischer Verriegelung an einer Tür zum Hineingehen in den und Hinausgehen aus einem Arbeitsbereich eingestellt ist, in dem eine Maschine, die von dem Drehstrommotor angetrieben wird, installiert ist, und die gegenelektromotorische-Kraft-Erfassungsteile (11, 12) der Sicherheitsausrüstung (3) jeweils elektrisch isoliert sind, und das Bestimmungsteil (14) ferner dazu ausgelegt ist, das Vorhandensein/Nichtvorhandensein eines Trennzustazands des Drehstrommotors (2) auf der Basis der gegenelektromotorzschen Kraft zu ermitteln, die in jeder Phase erfasst wird, und eine Verriegelung des Türschalters auf der Basis des Erfassungsausgassgssighals der Sicherheitsausrüstung (3) freigbt.

## Revendications

1. Équipement de sécurité (3) adapté pour détecter un arrêt d'un moteur triphasé (2), l'équipement de sécurité (3) comprenant :
une pluralité de parties de détection de force contre-électromotrice (11, 12), chaque partie de la pluralité de parties de détection de force contre-électromotrice (11, 12) étant conçue pour être connectée à deux bornes de câblage de chaque phase d'au moins deux phases ou plus du moteur triphasé (2), respectivement pour détecter une force contre-électromotrice de chaque phase ; et
une partie de détermination (14) qui détermine si le moteur triphasé (2) est ou non arrête, en fonction d'une sortie de détection des parties de détection de force contre électromotrice (11, 12), dans lequel
la pluralité de parties de détection de force contre-électromotrice détecte chaque force contre-électromotrice.

2. Équipement de sécurité (3) selon la revendication 1, dans lequel les parties de détection de force contre-électromotrice sont respectivement isolées électriquement, et la partie de détermination est conçue en outre pour déterminer l'existence/la non-existence d'un état de déconnexion du moteur triphasé (2), en fonction de à force contre-électromotrice détectée sur chaque phase ; et l'équipement de sécurité (3) est conçu pour être connecté à :
une pièce de contact d'un dispositif de commutation principal (7) destiné à mettre sous/hors tension l'alimentation électrique est intercalée entre l'une des bornes du câblage de chaque phase du moteur triphasé (2) et une borne d'une alimentation électrique triphasée (1),
une pièce de contact d'un dispositif de commutation sur une connexion en étoile (8) est intercalée entre l'autre borne du câblage et un point neutre, et
une pièce de contact d'un dispositif de commutation sur une connexion en triangle (9) est intercalée entre l'une des bornes du câblage et l'autre borne du câblage d'une phase différente, et le moteur triphasé (2) est démarré en étoile-triangle.

3. Équipement de sécurité (3) selon la revendication 2, comprenant :
une partie entrée de contact (13) à laquelle une entrée de contact correspondant à un état de contact du dispositif de commutation principal (7) est donnée,
dans lequel la partie de détermination (14) détermine un arrêt du moteur triphasé (2), en fonction de l'état de contact de la partie entrée de contact (13), lorsque la pièce de contact du dispositif de commutation principal (7) est mise hors tension et lorsque toutes les forces contre-électromotrices détectées par les parties de détection de force contre-électromotrice (11, 12) sont inférieures ou égales à des valeurs de seuil.

4. Équipement de sécurité (3) selon l'une quelconque des revendications 1 à 3, dans lequel une machine entraînée par le moteur triphasé (2) est installée dans une zone de travail, et un interrupteur de porte du type à verrouillage électromagnétique est placé sur une porte d'entrée/sortie de la zone de travail, dans lequel l'équipement de sécurité est conçu pour délivrer une sortie de détection, en fonction d'une détection de l'arrêt du moteur triphasé, à un verrou de l'interrupteur de porte pour permettre à la porte d'être débloquée.

5. Système de sécurité destiné à effectuer un démarrage étoile-triangle du moteur triphasé (2), comprenant :
le moteur triphasé (2) ;
un dispositif de commutation principal (7) destiné à effectuer la mise sous/hors tension d'une alimentation électrique du moteur triphasé (2) ;
un dispositif de commutation sur une connexion en étoile (8), destiné à placer le câblage du moteur triphasé (2) selon une connexion en étoile ;
un dispositif de commutation sur une connexion en triangle (9), destiné à placer le câblage du moteur triphasé (2) selon une connexion en triangle ; et
l'équipement de sécurité (3) selon l'une quelconque des revendications 1 à 3, destiné à délivrer une sortie de détection en fonction d'une détection d'arrêt du moteur triphasé (2).

6. Système de sécurité selon la revendication 5, dans lequel :
un interrupteur de porte du type à verrouillage électromagnétique est placé sur une porte d'entrée/sortie d'une zone de travail dans laquelle est installée une machine entraînée par le moteur triphasé, et les parties de détection de force contre-électromotrice (11, 12) de l'équipement de sécurité (3) sont respectivement isolées électriquement, et la partie de détermination (14) est conçue en outre pour déterminer l'existence/la non-existence d'un état de déconnexion du moteur triphasé (2), en fonction de la force contre-électromotrice détectée sur chaque phase, et débloque un verrou de l'interrupteur de porte, en fonction de la sortie de détection de l'équipement de sécurité (3).
